# EUROPEAN PATENT SPECIFICATION

(11) **EP 2 007 075 B1**
(45) Date of publication and mention of the grant of the patent: **25.04.2012**
(21) Application number: 06715379.1
(22) Date of filing: 08.03.2006
(51) Int. Cl.: H04L 12/26, G05B 19/418

(54) **DEVICE AND METHOD FOR COMMUNICATION RELAYING**
EINRICHTUNG UND VERFAHREN ZUR KOMMUNIKATIONSWEITERLEITUNG
DISPOSITIF ET PROCEDE DE RELAIS DE COMMUNICATION

(43) Date of publication of application: 24.12.2008
(73) Proprietor: Yamatake Corporation, Chiyoda-ku Tokyo 100-6419 (JP)
(72) Inventor: AOTA, Naoyuki, Chiyoda-ku, Tokyo 100-6419 (JP)
(74) Representative: Modiano, Micaela Nadia
(86) International application number: PCT/JP2006/304459
(87) International publication number: WO 2007/102209

(56) References cited:
- EP-A2- 1 276 275
- JP-A- 03 026 130
- JP-A- 59 221 132
- JP-A- 2002 261 792
- JP-A- 2006 050 152
- US-A1- 2003 140 150
- US-B1- 6 854 072

## Description

### Technical Field

The present invention relates to devices and methods for relaying communications, and more particularly, to communication relay device and method for relaying IP packets exchanged between a manufacture monitoring/control device and manufacturing devices connected to an IP network and used to manufacture, for example, semiconductor devices.

### Background Art

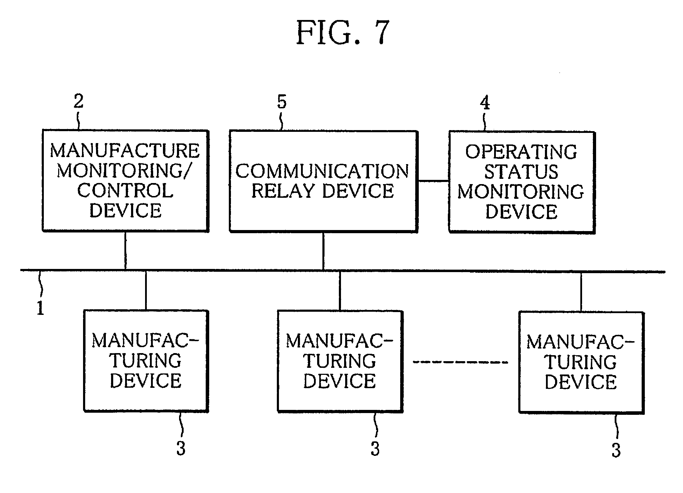

Generally, a semiconductor manufacturing plant is equipped with a variety of manufacturing devices such as a dry etching device and a stepper. The manufacturing devices are connected, as shown in FIG. 7, to an IP network 1 typified by an Ethernet (registered trademark) network, for example. The IP network 1 is also connected with a semiconductor manufacture monitoring/control device 2 (hereinafter merely referred to as manufacture monitoring/control device) for collectively monitoring and controlling multiple manufacturing devices 3. A preliminary process for fabricating a semiconductor wafer, for example, in such a semiconductor manufacturing plant includes about 300 to 500 steps, and approximately 300 manufacturing devices are operated for the purpose. A flat display manufacturing plant for fabricating liquid crystal display panels or plasma display panels is also equipped with numerous manufacturing devices for carrying out a similar manufacturing process.

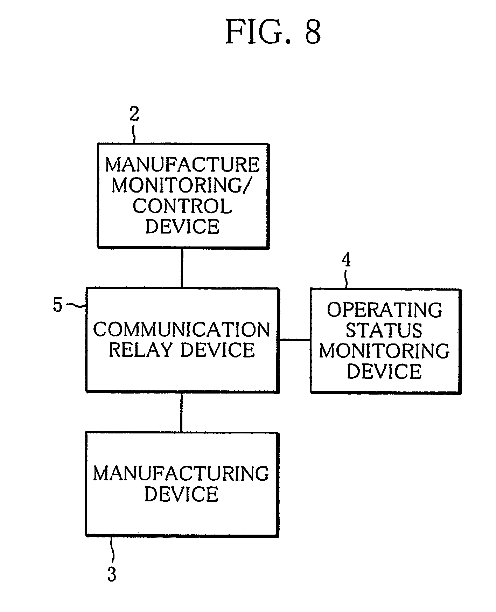

In such semiconductor or flat display manufacturing plants, an operating status monitoring device 4 for monitoring the operating status of the individual manufacturing devices 3 for the purpose of preventive maintenance is also installed in order to improve the yield of products and the operating ratios of the manufacturing devices 3. As schematically shown in FIG. 8, the operating status monitoring device 4 is logically connected to the IP network 1 through a communication relay device 5 for relaying information exchanged between the manufacture monitoring/control device 2 and each manufacturing device 3. The communication relay device 5 delivers the received data also to the operating status monitoring device 4.

The manufacture monitoring/control device 2 and the manufacturing device 3 communicate with each other by means of IP addresses previously assigned thereto. For example, the manufacture monitoring/control device 2, the manufacturing device 3 and the communication relay device 5 are previously assigned the IP addresses "192.168.123.1", "192.168.123.3" and "192.168.123.2", respectively.

When control information, for example, is to be sent from the manufacture monitoring/control device 2 to the manufacturing device 3, the manufacture monitoring/control device 2 sends the control information to the IP address "192.168.123.2" of the communication relay device 5. On receiving the control information, the communication relay device 5 forwards the received control information to the IP address "192.168.123.3" of the manufacturing device 3 as well as to the operating status monitoring device 4.

On the other hand, when operating status information, for example, is to be sent from the manufacturing device 3, the manufacturing device 3 sends the operating status information to the IP address "192.168.123.2" of the communication relay device 5. On receiving the operating status information, the communication relay device 5 relays the operating status information to the IP address "192.168.123.1" of the manufacture monitoring/control device 2 and also sends the received information to the operating status monitoring device 4. Thus, the communication relay device 5 plays the role of what is called a proxy server.

In semiconductor or flat display manufacturing plants, the operating status of the individual manufacturing devices is monitored in this manner to detect a sign of trouble in the manufacturing devices for the purpose of preventive maintenance and thereby improve the yield of the manufacturing process.

Meanwhile, IP addresses used to exchange information between devices are managed at the level of the third layer (Network layer) in the OSI reference model. It is well known, however, that actual communication is performed by means of MAC addresses that are managed at the level of the MAC sublayer of the second layer (Data-link layer). MAC addresses are unique addresses each with a length of 48 bits and, generally, are fixed addresses uniquely assigned to hardware such as network interface cards.

In the event the communication relay device 5 installed in a semiconductor or flat display manufacturing plant fails for some reason or other, the manufacture monitoring/control device 2 and the manufacturing device 3 can no longer communicate with each other, with the result that the manufacturing process has to be stopped. In order to restore communication between the manufacture monitoring/control device 2 and the manufacturing device 3 despite the failure of the communication relay device 5, it is necessary that destination IP addresses should be set again so that the manufacture monitoring/control device 2 and the manufacturing device 3 can directly communicate with each other without the communication relay device 5 in between. Specifically, where the IP addresses are assigned as mentioned above, the IP address "192.168.123.3" of the manufacturing device 3 needs to be set in the manufacture monitoring/control device 2 as the destination address, and also the IP address "192.168.123.1" of the manufacture monitoring/control device 2 needs to be set in the manufacturing device 3 as the destination address. Naturally, the manufacturing process remains suspended during the resetting of IP addresses.

Also, when the communication relay device 5 is connected between the manufacture monitoring/control device 2 and the manufacturing device 3 to restart monitoring of the operating status of the manufacturing device 3 by the operating status monitoring device 4, the destination addresses set in the manufacture monitoring/control device 2 and the manufacturing device 3 must be again set to the IP address "192.168.123.2" of the communication relay device 5.

While the addresses are updated in this manner, the manufacturing process must of course be suspended. Especially in the case of a semiconductor or flat display manufacturing process involving numerous manufacturing devices, a problem arises in that the operating ratios of the manufacturing devices significantly lower. Also, if the IP addresses are wrongly set during the resetting or updating, communication between the devices fails, and when the worst comes to the worst, the system goes down.

To just allow the operating status monitoring device 4 to intervene in the session established between the manufacture monitoring/control device 2 and the manufacturing device 3, session hijacking commonly known may be adopted to achieve the purpose. Where session hijacking is employed, no changes need to be made to the IP addresses or network settings. However, if the operating status monitoring device 4 transmits IP packets to the manufacture monitoring/control device 2 or the manufacturing device 3, the sequence number and ACK number in the TCP header are updated in accordance with the number of the packets transmitted, giving rise to a problem that IP packets cannot be normally exchanged thereafter between the manufacture monitoring/control device 2 and the manufacturing device 3.

US 6854072 discloses a system and method for providing highly available and/or fault tolerant servers by implementing a lookup table or other data structure that allows a common file handle to be generated and interpreted by any component server of the HA server, thereby preventing stale file handles and removing local file system requirements as to media, implementation, and location.

### Disclosure of the Invention

The present invention was created to solve the above problems, and an object thereof is to provide communication relay device and method which permit communication to be normally performed between a manufacture monitoring/control device, manufacturing devices and an operating status monitoring device without requiring any changes to be made to network settings such as IP addresses of the manufacture monitoring/control device and manufacturing devices, and also permit monitoring of the operating status of the individual manufacturing devices.

To achieve the object, the present invention provides a communication relay device for relaying IP packets exchanged between a manufacturing device connected to an IP network, a manufacture monitoring/control device connected to the IP network to monitor and control operation of the manufacturing device, and an operating status monitoring device for monitoring operating status of the manufacturing device based on information contained in IP packets exchanged between the manufacturing device and the manufacture monitoring/control device. The communication relay device comprises: an address information storage storing IP addresses and MAC addresses assigned in advance to the manufacturing device and the manufacture monitoring/control device; an ARP controller for sending out ARP packets containing the IP addresses of the manufacturing device and the manufacture monitoring/control device, respectively, and also containing the MAC address of the communication relay device when the communication relay device starts to relay IP packets exchanged between the manufacturing device and the manufacture monitoring/control device; and a sequence counter for holding a sequence number contained in each of IP packets exchanged between the manufacturing device, the manufacture monitoring/control device and the operating status monitoring device when the IP packets are relayed by the communication relay device, wherein, when an IP packet is received from any one of the manufacturing device, the manufacture monitoring/control device and the operating status monitoring device, the communication relay device replaces the sequence number of the received IP packet with one indicated by the sequence counter before forwarding the IP packet to a destination device.

Preferably, when the communication relay device stops relaying IP packets exchanged between the manufacturing device and the manufacture monitoring/control device, the ARP controller sends out, to the IP network, information about the IP and MAC addresses assigned beforehand to the manufacturing device and the manufacture monitoring/control device.

Also, each of the manufacturing device and the manufacture monitoring/control device preferably includes an ARP cache for storing address information correlating IP and MAC addresses with each other, and the ARP controller sends out the ARP packets to the IP network at intervals of time shorter than a data retention time (life) over which the respective ARP caches hold the address information.

Preferably, the manufacturing device is a semiconductor manufacturing device or a flat panel display manufacturing device.

Also, to achieve the above object, the present invention provides a communication relay method for relaying, by means of a communication relay device, IP packets exchanged between a manufacturing device connected to an IP network, a manufacture monitoring/control device connected to the IP network to monitor and control operation of the manufacturing device, and an operating status monitoring device for monitoring operating status of the manufacturing device based on information contained in IP packets exchanged between the manufacturing device and the manufacture monitoring/control device. The communication relay method comprises the steps, executed by the communication relay device, of: storing IP addresses and MAC addresses assigned in advance to the manufacturing device and the manufacture monitoring/control device; sending out ARP packets containing the IP addresses of the manufacturing device and the manufacture monitoring/control device, respectively, and also containing the MAC address of the communication relay device; and receiving an IP packet from any one of the manufacturing device, the manufacture monitoring/control device and the operating status monitoring device, storing a sequence number contained in the received IP packet, replacing the sequence number of the IP packet with a sequence number that is acceptable to a destination of the IP packet, and forwarding the IP packet to the destination.

Preferably, the manufacturing device and the manufacture monitoring/control device each include an ARP cache for storing address information correlating IP and MAC addresses with each other, and the ARP packets are sent out to the IP network at intervals of time shorter than a data retention time (life) over which the respective ARP caches hold the address information.

The communication relay device and method according to the present invention are applied to the exchange of IP packets between the manufacture monitoring/control device and the manufacturing device connected to an IP network and used in a semiconductor manufacturing process or flat panel display manufacturing process, for example. The ARP controller of the communication relay device modifies the correlations between IP and MAC addresses such that for the manufacture monitoring/control device and the manufacturing device, the communication looks as if it were being performed directly with each other. Thus, the IP packets exchanged between the manufacture monitoring/control device and the manufacturing device can be relayed properly without the need to change network settings such as the IP addresses of the manufacture monitoring/control device and the manufacturing device.

Also, in the communication relay device and method of the present invention, the sequence counter stores the sequence number contained in each of IP packets exchanged between the manufacturing device, the manufacture monitoring/control device and the operating status monitoring device when the IP packets are relayed by the communication relay device. When an IP packet is received from any one of the manufacturing device, the manufacture monitoring/control device and the operating status monitoring device, the communication relay device replaces the sequence number of the received IP packet with one indicated by the sequence counter before forwarding the IP packet to a destination device. Accordingly, IP packets exchanged between the devices via the communication relay device can retain the correct sequence number. This enables the operating status monitoring device to monitor the operating status of the manufacturing device while communication between the devices is relayed by the communication relay device.

Further, with the communication relay device and method of the present invention, IP packets are relayed and at the same time information contained therein is forwarded to the operating status monitoring device. It is therefore possible to monitor the operating status of the manufacturing device without lowering the operating ratio of the semiconductor or plasma display manufacturing process, for example.

Moreover, the communication relay device and method of the present invention have only to be applied to the IP network, whereupon IP packets can be relayed properly without the need to change network settings. Thus, the operating status monitoring device can be attached and detached as needed without entailing suspension of the semiconductor or plasma display manufacturing process, for example. Even in the event the communication relay device of the present invention stops functioning for some reason or other, the time for which the manufacturing process has to be suspended can be minimized.

### Brief Description of the Drawings

FIG. 1 schematically illustrates physical connections of devices to an IP network installed in a semiconductor or flat panel display manufacturing plant and equipped with a communication relay device to which a communication relay method according to one embodiment of the present invention is applied.
FIG. 2 illustrates logical connections of the devices to the IP network shown in FIG. 1.
FIG. 3 is a sequence diagram illustrating a procedure for exchanging ARP packets between a manufacture monitoring/control device and a manufacturing device.
FIG. 4 is a sequence diagram illustrating a procedure for exchanging ARP packets between a communication relay device and each of the manufacture monitoring/control device and the manufacturing device.
FIG. 5 is a sequence diagram illustrating a procedure for exchanging ARP packets between the communication relay device, the manufacture monitoring/control device and the manufacturing device when the communication relay device is going to stop relaying packets.
FIG. 6 is a sequence diagram illustrating a procedure for transmission control using sequence numbers, applied to the exchange of packets between the manufacture monitoring/control device and the manufacturing device via the communication relay device.
FIG. 7 schematically illustrates physical connections of devices to an IP network installed in a semiconductor or flat panel display manufacturing plant and equipped with a conventional communication relay device.
FIG. 8 illustrates logical connections of the devices to the IP network shown in FIG. 7.

### Best Mode of Carrying out the Invention

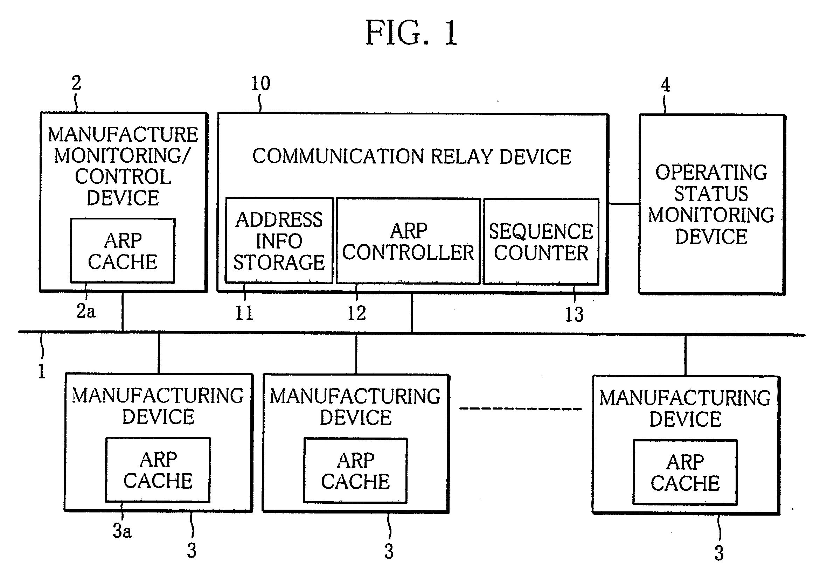

A communication relay device to which a communication relay method according to an embodiment of the present invention is applied will be hereinafter described with reference to the accompanying drawings. In FIGS. 1 to 6 illustrating the embodiment of the present invention, reference numerals identical with those appearing in FIGS. 7 and 8 denote elements identical in basic configuration with the counterparts shown in FIGS. 7 and 8. Also, the accompanying drawings are given simply to illustrate the embodiment of the present invention and are not intended to limit the invention.

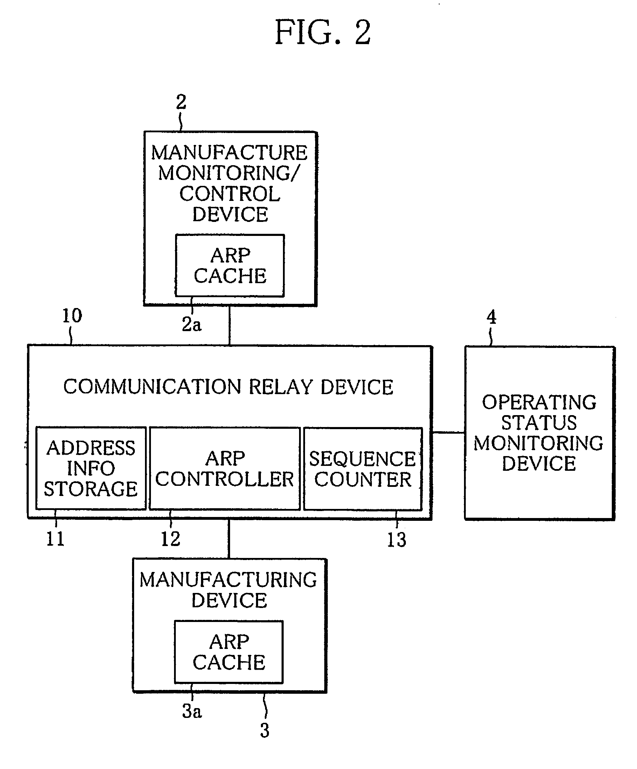

FIGS. 1 and 2 exemplify the configuration of a network to which the present invention is applied and to which are connected various devices installed in a semiconductor manufacturing plant, flat panel display manufacturing plant or the like. In the figures, reference numeral 1 denotes an IP network, such as an Ethernet network, to which TCP/IP is applied. The IP network 1 is connected with a manufacture monitoring/control device 2 for monitoring and controlling various devices used in a semiconductor manufacturing process, flat panel display manufacturing process or the like, as well as with a plurality of manufacturing devices 3 for carrying out the semiconductor or flat panel display manufacturing process under the control of the manufacture monitoring/control device 2.

The IP network 1 is also connected with a communication relay device 10 for relaying information (IP packets) exchanged between the manufacture monitoring/control device 2 and the manufacturing devices 3 while acquiring the information (IP packets), as described in detail later. The communication relay device 10 also transfers the acquired information (IP packets) to an operating status monitoring device 4. The operating status monitoring device 4 analyzes the contents of information (IP packets) exchanged between the manufacture monitoring/control device 2 and the manufacturing devices 3 to detect a sign of trouble in the manufacturing devices 3. The communication relay device 10 includes an address information storage 11 for storing IP addresses and MAC addresses assigned in advance to the manufacture monitoring/control device 2 and the manufacturing devices 3, and an ARP controller 12 for sending out ARP packets. When the communication relay device 10 starts to relay IP packets exchanged between the manufacture monitoring/control device 2 and the manufacturing devices 3, the ARP controller 12 sends out, to the IP network 1, ARP packets containing the IP addresses of the manufacture monitoring/control device 2 and the manufacturing devices 3, respectively, and also containing the MAC address of the communication relay device 10.

The manufacture monitoring/control device 2 and the manufacturing devices 3 are each provided with an ARP cache (2a, 3a) for storing address information correlating IP and MAC addresses with each other. In Windows (registered trademark), the life, or data retention time, of the ARP cache is two minutes to 10 minutes. If the data retention time of the ARP cache 2a, 3a expires and thus the address information correlating the IP and MAC addresses with each other is lost, the manufacture monitoring/control device 2 or the manufacturing device 3, which is to transmit an IP packet, sends out an ARP request to acquire the MAC address.

The following describes a communication relay method carried out by the communication relay device 10 having the configuration explained above. In the following, it is assumed that the manufacture monitoring/control device 2 is previously assigned a MAC address "11:11:11:11:11:11", which is 48 bits long and expressed in hexadecimal notation, and an IP address "192.168.123.1", that the manufacturing device 3 is previously assigned a MAC address "33:33:33:33:33:33" and an IP address "192.168.123.3", and that the communication relay device 10 is previously assigned a MAC address "22:22:22:22:22:22" and an IP address "192.168.123.2". These MAC and IP addresses are given for convenience' sake only, and the addresses to be assigned are not limited to these.

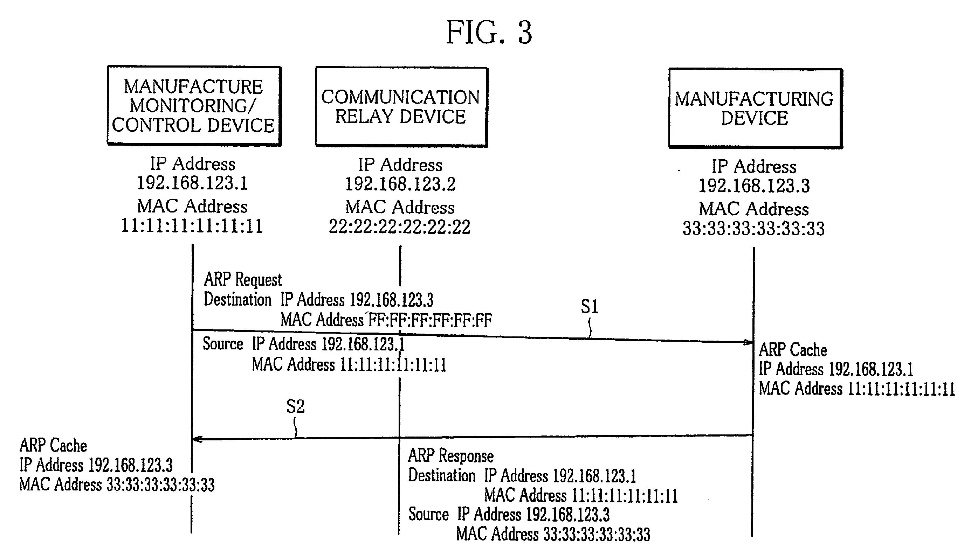

First, the manner of how the manufacture monitoring/control device 2 and the manufacturing device 3 acquire each other's MAC addresses, without the communication relay device 10 acting in between, will be explained with reference to the sequence diagram of FIG. 3, wherein the manufacture monitoring/control device 2 sends an ARP packet to the manufacturing device 3.

To acquire the MAC address of the manufacturing device 3, the manufacture monitoring/control device 2 sends out an ARP request (destination MAC address "EF: FF: FF: FF: FF: FF") to the IP network 1 (Step S1). This ARP request is sent in order to acquire the MAC address corresponding to the IP address "192.168.123.3" of the manufacturing device 3 and contains the source IP address "192.168.123.1" and the source MAC address "11:11:11:11:11:11".

On receiving the ARP request, the manufacturing device 3 recognizes that the received request is directed to its own IP address. Thus, the manufacturing device 3 sends an ARP response containing its own MAC address "33:33:33:33:33:33" to the manufacture monitoring/control device 2 from which the ARP request has been received, and also stores the IP and MAC addresses of the manufacture monitoring/control device 2, contained in the ARP request, in the ARP cache 3a provided therein (Step S2).

The ARP response sent from the manufacturing device 3 in response to the ARP request is received by the manufacture monitoring/control device 2, whereupon the MAC address of the manufacturing device 3 is extracted from the ARP response and the IP and MAC addresses of the manufacturing device 3 are stored in the ARP cache 2a.

When an IP packet is to be transmitted but if the data retention time (life) of the ARP cache has expired and thus the address information in the ARP cache is lost, the manufacture monitoring/control device 2 or the manufacturing device 3 sends out an ARP request to acquire the necessary MAC address, as mentioned above, and updates the contents of the ARP cache. The manufacture monitoring/control device 2 and the manufacturing device 3 thereafter acquire each other's MAC addresses whenever necessary, to update their ARP caches. In this manner, the manufacture monitoring/control device 2 and the manufacturing device 3 communicate with each other while securing each other's MAC addresses.

In the above example, an ARP request is sent from the manufacture monitoring/control device 2 to the manufacturing device 3 to update each other's ARP caches. Also when an ARP request is sent from the manufacturing device 3 to the manufacture monitoring/control device 2, the same process is followed and the two can acquire each other's MAC addresses.

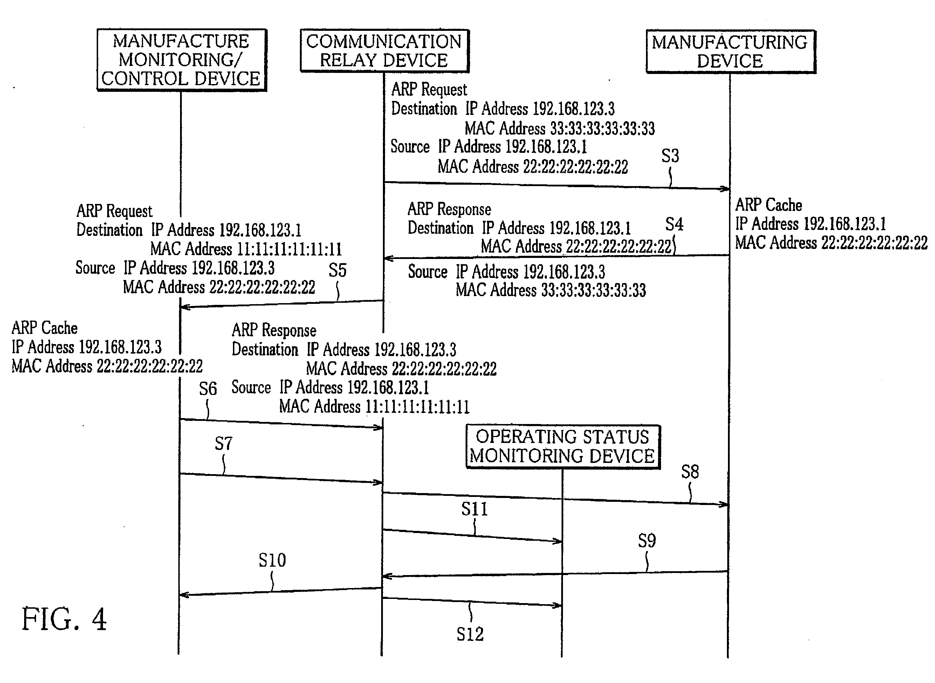

A communication relay procedure to which the communication relay method of the present invention is applied will be now described with reference to the sequence diagram of FIG. 4. The following describes the case where the communication relay device 10 first sends an ARP request to the manufacturing device 3 and then the manufacturing device 3 sends an ARP response, as a response packet, to the manufacture monitoring/control device 2. Alternatively, an ARP request may first be sent to the manufacture monitoring/control device 2 and then the device 2 may send an ARP response, as a response packet, to the manufacturing device 3, though not explained herein, to update the ARP caches.

First, the communication relay device 10 unicasts, to the manufacturing device 3, an ARP request containing the source IP address "192.168.123.1", the source MAC address "22:22:22:22:22:22", and the destination MAC address "33:33:33:33:33:33" (Step S3). On receiving the ARP request, the manufacturing device 3 recognizes that the received request is addressed thereto. Then, the manufacturing device 3 sends, as a response to the ARP request, an ARP response containing its own MAC address "33:33:33:33:33:33" to the communication relay device 10 with the MAC address "22:22:22:22:22:22", and also stores, in the ARP cache 3a, the MAC address "22:22:22:22:22:22" contained in the ARP request as the MAC address of the manufacture monitoring/control device 2 (Step S4). Namely, the communication relay device 10 behaves as if it had the IP address of the manufacture monitoring/control device 2, to cause the manufacturing device 3 to update its ARP cache 3a.

Subsequently, the communication relay device 10 unicasts, to the manufacture monitoring/control device 2, an ARP request containing the source IP address "192.168.123.3", the source MAC address "22:22:22:22:22:22" and the destination MAC address "11:11:11:11:11:11" (Step S5). On receiving the ARP request, the manufacture monitoring/control device 2 recognizes that the received request is addressed thereto. Then, the manufacture monitoring/control device 2 sends, as a response to the ARP request, an ARP response containing its own MAC address "11:11:11:11:11:11" to the communication relay device 10 with the MAC address "22:22:22:22:22:22", and also stores, in the ARP cache 2a, the MAC address "22:22:22:22:22:22" as the MAC address of the manufacturing device 3 (Step S6). Namely, the communication relay device 10 behaves as if it had the IP address of the manufacturing device 3, to cause the manufacture monitoring/control device 2 to update its ARP cache 2a.

In this manner, the ARP caches 2a and 3a of the respective devices 2 and 3 are updated by the communication relay device 10. When an IP packet addressed to the manufacturing device 3 is thereafter received from the manufacture monitoring/control device 2 (Step S7), the communication relay device 10 forwards the received packet to the manufacturing device 3 (Step S8), and when an IP packet addressed to the manufacture monitoring/control device 2 is received from the manufacturing device 3 (Step S9), the communication relay device 10 forwards the received packet to the manufacture monitoring/control device 2 (Step S10). Further, when an IP packet exchanged between the manufacture monitoring/control device 2 and the manufacturing device 3 is received, the communication relay device 10 sends the received IP packet to the operating status monitoring device 4 (Steps S11 and S12). The operating status monitoring device 4 has the function of analyzing the information contained in the received IP packet to detect a fault or a sign of trouble in the manufacturing device 3, though not explained in detail herein.

Thus, the communication relay device 10 relays communication between the manufacture monitoring/control device 2 and the manufacturing device 3 while behaving in a manner such that for the devices 2 and 3, the communication looks as if it were being directly performed between the devices 2 and 3. The ARP requests are sent out from the communication relay device 10 at intervals of time shorter than the data retention time (life) (e.g., two minutes) of the ARP caches 2a and 3a of the respective devices 2 and 3. Accordingly, the ARP caches 2a and 3a of the devices 2 and 3 are always kept updated by the respective ARP requests from the communication relay device 10. Packets exchanged between the manufacture monitoring/control device 2 and the manufacturing device 3 are therefore always relayed via the communication relay device 10.

If an ARP request (destination MAC address "FF:FF:FF:FF:FF:FF") is sent from the manufacture monitoring/control device 2 or the manufacturing device 3 to a different device, the MAC address of the originating device is acquired by the destination device, and the contents of the ARP caches in the destination and originating devices are rewritten. Thus, when such an ARP request is transmitted, the communication relay device 10 immediately sends, to the individual devices, an ARP request containing the MAC address of the communication relay device 10 as the source MAC address, following the aforementioned procedure, to update the individual ARP caches 2a and 3a.

The following describes the case where the communication relay device 10 stops relaying the ongoing communication between the manufacture monitoring/control device 2 and the manufacturing device 3. In the following, first, the communication relay device 10 sends an ARP request to the manufacturing device 3 and then the manufacturing device 3 sends an ARP response, as a response packet, to the manufacture monitoring/control device 2. Alternatively, an ARP request may be first sent to the manufacture monitoring/control device 2 and then the device 2 may send an ARP response, as a response packet, to the manufacturing device 3, though not explained herein, to update the ARP caches.

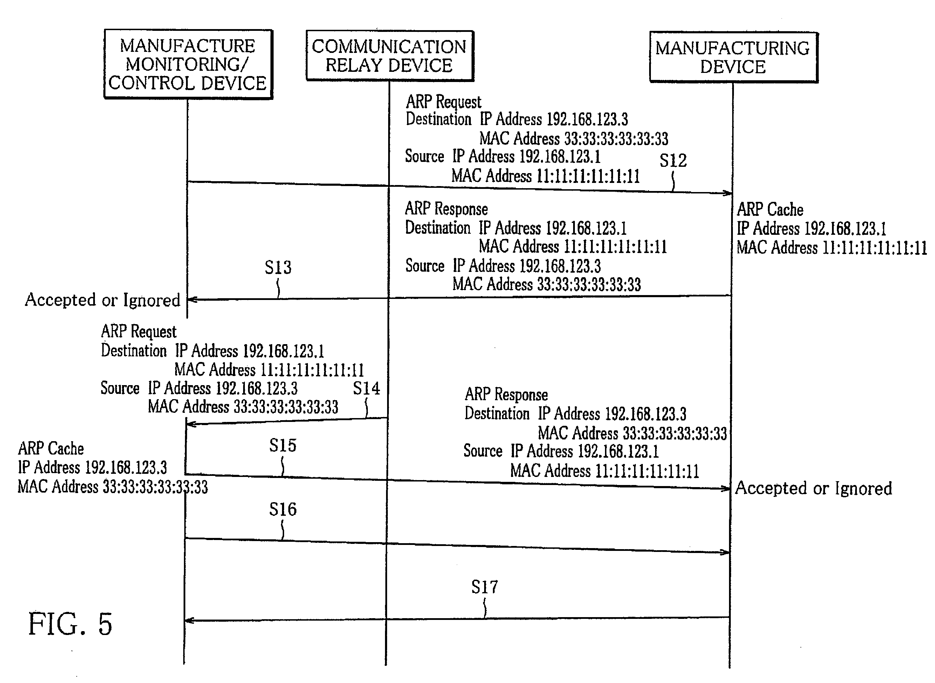

As shown in the sequence diagram of FIG. 5, first, the communication relay device 10 sends, to the manufacturing device 3, an ARP request containing the IP address "192.168.123.1" and the MAC address "11:11:11:11:11:11" as the source addresses (Step S12). On receiving the ARP request, the manufacturing device 3 stores, in the ARP cache 3a, the source MAC address "11:11:11:11:11:11" as the MAC address of the manufacture monitoring/control device 2. Namely, the communication relay device 10 causes the manufacturing device 3 to update its ARP cache 3a so that the IP address of the manufacture monitoring/control device 2 may be correlated with the real MAC address assigned in advance to the device 2.

Then, the manufacturing device 3 sends, as a response to the ARP request, an ARP response containing its own MAC address "33:33:33:33:33:33" to the manufacture monitoring/control device 2 with the MAC address "11:11:11:11:11:11" (Step S13). The manufacture monitoring/control device 2 accepts or ignores the ARP response (whether the response is accepted or ignored depends on the device 2).

Subsequently, the communication relay device 10 sends, to the manufacture monitoring/control device 2, an ARP request containing the IP address "192.168.123.3" and the MAC address "33:33:33:33:33:33" as the source addresses (Step S14). On receiving the ARP request, the manufacture monitoring/control device 2 sends, as a response to the ARP request, an ARP response containing its own MAC address "11:11:11:11:11:11" to the manufacturing device 3 with the MAC address "33:33:33:33:33:33", and also stores, in the ARP cache 2a, the source MAC address "33:33:33:33:33:33" as the MAC address of the manufacturing device 3. Namely, the communication relay device 10 causes the manufacture monitoring/control device 2 to update its ARP cache 2a so that the IP address of the manufacturing device 3 may be correlated with the real MAC address assigned in advance to the device 3 (Step S15).

The manufacturing device 3 accepts or ignores the ARP response (whether the response is accepted or ignored depends on the device 3).

After the ARP caches 2a and 3a of the respective devices 2 and 3 are updated in this manner, the communication relay device 10 no longer relays the communication between the manufacture monitoring/control device 2 and the manufacturing device 3.

Where the MAC addresses held in the ARP caches 2a and 3a are updated as mentioned above, disagreement of sequence number occurs in the packets exchanged between the manufacture monitoring/control device 2 and the manufacturing device 3, making the device 2 or 3 unable to communicate with the other device.

Thus, when stopping relaying IP packets exchanged between the manufacture monitoring/control device 2 and the manufacturing device 3, the communication relay device 10 sends an RST packet to each of the devices 2 and 3, in order to temporarily suspend the communication between the devices 2 and 3. After the exchange of IP packets is temporarily suspended by the communication relay device 10, the manufacture monitoring/control device 2 and the manufacturing device 3 restart to communicate with each other through a reconnection established by their higher-level protocol (Steps S16 and S17).

The following describes in more detail the operation of the communication relay device 10 for relaying communication between the manufacture monitoring/control device 2 and the manufacturing device 3.

IP packets exchanged across the IP network 1 are allocated recurring TCP sequence numbers to ascertain whether the IP packets have been successfully delivered or not.

The communication relay method of the present invention will be described with reference to an exemplary case where the operating status monitoring device 4 sends a packet to the manufacturing device 3 while the manufacture monitoring/control device 2 is sending packets to the manufacturing device 3 via the communication relay device 10. The following explanation is given in order to help understand the sequence number control characterizing the communication relay method of the present invention, and therefore, no particular reference is made to the error recovery process and the like.

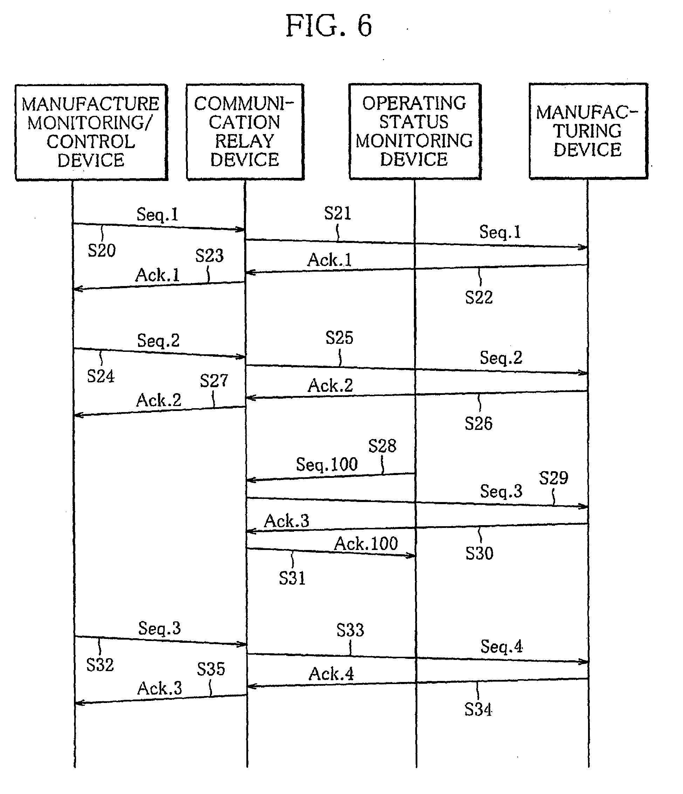

Let us suppose that, as shown in the sequence diagram of FIG. 6, a packet sent from the manufacture monitoring/control device 2 to the manufacturing device 3 has a sequence number of, for example, "Seq1" (Step S20). On receiving the packet, the communication relay device 10 stores the sequence number in its sequence counter 13, which manages the sequence numbers contained in IP packets exchanged between the manufacture monitoring/control device 2 and the manufacturing device 3, and also forwards the received packet with the sequence number "Seq1" to the manufacturing device 3 (Step S21). If the packet is successfully received, the manufacturing device 3 sends, as an acknowledgment, a packet (hereinafter referred to as "Ack#") containing the sequence number "SeqN" plus the number of received bytes back to the communication relay device 10 (Step S22). In this instance, the acknowledgment "Ack1" is received, and the communication relay device 10 forwards the acknowledgment "Ack1" to the manufacture monitoring/control device 2 (Step S23).

In practice, the sequence number, as well as an ACK number which is contained in an acknowledgment packet (Ack packet) and notifies the originating device of successful reception of an IP packet, are incremented in accordance with the number of received bytes, but are expressed herein in simplified form for ease of understanding.

Subsequently, the manufacture monitoring/control device 2 sends out an IP packet addressed to the manufacturing device 3 and having a sequence number of "Seq2" (Step S24). The communication relay device 10 receives the IP packet and forwards the received IP packet with the sequence number "Seq2" to the manufacturing device 3 (Step S25). If the packet is successfully received, the manufacturing device 3 sends an acknowledgment "Ack2" back to the communication relay device 10 (Step S26). The communication relay device 10 forwards the acknowledgment "Ack2" to the manufacture monitoring/control device 2 (Step S27).

Let us suppose that, at this time, the operating status monitoring device 4 sends out an IP packet with a sequence number of, for example, "Seq100", to the manufacturing device 3 (Step S28). The initial value of the sequence number is set at random, and therefore, the sequence number initially set by the manufacture monitoring/control device 2 and that set by the operating status monitoring device 4 differ from each other. It is assumed here that the IP packet sent from the operating status monitoring device 4 to the manufacturing device 3 has the sequence number "Seq100".

At this time, the manufacturing device 3 is expecting to receive next an IP packet with the sequence number "Seq3" since up to the IP packet with the sequence number "Seq2" has been received, as stated above. Thus, if the communication relay device 10 forwards the IP packet with the sequence number "Seq100" directly to the manufacturing device 3, the manufacturing device 3 discards the IP packet because the received sequence number disagrees with the expected one. To avoid such a situation, the communication relay device 10 looks up the sequence number stored in the sequence counter 13, then replaces the sequence number of the IP packet received from the operating status monitoring device 4 with the sequence number "Seq3", and sends the IP packet to the manufacturing device 3 (Step S29).

If the packet is successfully received, the manufacturing device 3 sends "Ack3" as an acknowledgment back to the communication relay device 10 (Step S30). On receiving "Ack3", the communication relay device 10 looks up the sequence number stored in the sequence counter 13, then replaces "Ack3" with "Ack100" so that the acknowledgment may be accepted by the operating status monitoring device 4 as a response to "Seq100", and sends "Ack100" to the operating status monitoring device 4 (Step S31).

Let us suppose that the manufacture monitoring/control device 2 thereafter sends an IP packet to the manufacturing device 3, and this IP packet naturally has the sequence number "Seq3" (Step S32). By this time, the manufacturing device 3 has received up to the IP packet with the sequence number "Seq3", as mentioned above. Thus, if the communication relay device 10 directly forwards the received IP packet with the sequence number "Seq3", the manufacturing device 3 discards the IP packet, judging that the received IP packet is identical with the one received immediately before. Accordingly, the communication relay device 10 looks up the sequence number stored in the sequence counter 13, replaces the sequence number of the IP packet received from the manufacture monitoring/control device 2 with the sequence number "Seq4", and sends the IP packet to the manufacturing device 3 (Step S33).

If the IP packet is successfully received, the manufacturing device 3 sends "Ack4" as an acknowledgment back to the communication relay device 10 (Step S34). On receiving the acknowledgment "Ack4", the communication relay device 10 looks up the sequence number stored in the sequence counter 13, then replaces "Ack4" with "Ack3" so that the acknowledgment may be accepted by the manufacture monitoring/control device 2, and sends the acknowledgment to the manufacture monitoring/control device 2 (Step S35).

In this manner, the communication relay device 10 relays packets exchanged between respective devices while at the same time managing the sequence numbers with the use of the sequence counter 13. The sequence counter 13 includes a plurality of counters sufficient to store the sequence numbers of packets forwarded to and received from the manufacture monitoring/control device 2, the manufacturing devices 3 and the operating status monitoring device 4, respectively. In the illustrated example, the three devices are involved, and therefore, the sequence counter 13 may be adapted to hold six items of counter data.

In the event the communication relay device 10 goes down for some reason or other, the communication fails to be continued because of disagreement of sequence numbers, resulting in timeout. However, since the manufacture monitoring/control device 2 or the manufacturing device 3 starts to update each other's ARP caches and also the sequence number is reset, the time over which the communication is disrupted can be minimized.

Thus, with the communication relay device and method of the present invention, the address information storage 11 of the communication relay device 10 stores the IP and MAC addresses assigned beforehand to the manufacture monitoring/control device 2 and the manufacturing device 3 connected to the IP network 1. When the communication relay device 10 starts to relay IP packets exchanged between the manufacture monitoring/control device 2 and the manufacturing device 3, the ARP controller 12 sends out, to the IP network 1, an ARP packet containing the IP address of the manufacture monitoring/control device 2 as well as the MAC address of the communication relay device 10, and an ARP packet containing the IP address of the manufacturing device 3 as well as the MAC address of the communication relay device 10. The communication relay device 10 can therefore relay an IP packet from one of the devices to the other and vice versa in such a manner that the devices communicating with each other are unaware of the presence of the intervening communication relay device 10.

Also, the communication relay device 10 of the present invention includes the sequence counter 13 for holding the sequence numbers contained in IP packets exchanged between the manufacturing device 3, the manufacture monitoring/control device 2 and the operating status monitoring device 4 via the communication relay device 10. When an IP packet is received from any of the manufacturing device 3, the manufacture monitoring/control device 2 and the operating status monitoring device 4, the communication relay device 10 replaces, if necessary, the sequence number of the received IP packet with a sequence number indicated by the sequence counter 13 before forwarding the IP packet to a destination device over the IP network 1. It is therefore possible to manage with accuracy the sequence numbers of IP packets exchanged between the devices via the communication relay device 10. Thus, the communication relay device and method of the present invention permit the operating status monitoring device 4 to monitor the operating status of the manufacturing device 3 while at the same time relaying packets communicated between the respective devices.

When the communication relay device 10 stops relaying IP packets exchanged between the manufacture monitoring/control device 2 and the manufacturing device 3, the ARP controller 12 sends out, to the IP network 1, information about the IP and MAC addresses assigned in advance to the manufacture monitoring/control device 2 and the manufacturing device 3. Accordingly, the manufacture monitoring/control device 2 and the manufacturing device 3 can thereafter directly communicate with each other.

Further, the ARP controller 12 sends out the ARP requests to the IP network 1 at intervals of time shorter than the data retention time (life) of the ARP caches respectively provided in the manufacture monitoring/control device 2 and the manufacturing device 3. This enables the ARP caches in the respective devices 2 and 3 to always hold the MAC address of the communication relay device 10, and accordingly, packets sent from the manufacture monitoring/control device 2 and the manufacturing device 3 reach the communication relay device 10 without fail to be relayed thereby.

While the communication relay device and method according to the present invention have been described above, it is to be noted that the present invention is not limited to the foregoing embodiment alone and may be modified in various ways without departing from the scope of the invention. For example, although the above embodiment is applied to a bus network, the present invention is equally applicable to a star network with a hub.

## Claims

1. A communication relay device (10) for relaying IP packets exchanged between a manufacturing device (3) connected to an IP network (1), a manufacture monitoring/control device (2) connected to the IP network (1) to monitor and control operation of the manufacturing device (3), and an operating status monitoring device (4) for monitoring operating status of the manufacturing device (3) based on information contained in IP packets exchanged between the manufacturing device (3) and the manufacture monitoring/control device (2), the communication relay device (10) comprising:
an address information storage (11) storing IP addresses and MAC addresses assigned in advance to the manufacturing device (3) and the manufacture monitoring/control device (2);
an ARP controller (12) for sending out ARP packets containing the IP addresses of the manufacturing device (3) and the manufacture monitoring/control device (2), respectively, and also containing the MAC address of the communication relay device (10) when the communication relay device (10) starts to relay IP packets exchanged between the manufacturing device (3) and the manufacture monitoring/control device (2); and
a sequence counter (13) for holding a sequence number contained in each of IP packets exchanged between the manufacturing device (3), the manufacture monitoring/control device (2) and the operating status monitoring device (4) when the IP packets are relayed by the communication relay device (10),
wherein, when an IP packet is received from any one of the manufacturing device (3), the manufacture monitoring/control device (2) and the operating status monitoring device (4), the communication relay device (10) replaces the sequence number of the received IP packet with one indicated by the sequence counter (13) before forwarding the IP packet to a destination device.

2. The communication relay device (10) according to claim 1, wherein, when the communication relay device (10) stops relaying IP packets exchanged between the manufacturing device (3) and the manufacture monitoring/control device (2), the ARP controller (12) sends out, to the IP network (1), information about the IP and MAC addresses assigned beforehand to the manufacturing device (3) and the manufacture monitoring/control device (2).

3. The communication relay device (10) according to claim 1 or 2, wherein the manufacturing device (3) and the manufacture monitoring/control device (2) each include an ARP cache (3a, 2a) for storing address information correlating IP and MAC addresses with each other, and wherein the ARP controller (12) sends out the ARP packets to the IP network (1) at intervals of time shorter than a data retention time over which the respective ARP caches (3a, 2a) hold the address information.

4. The communication relay device (10) according to any one of claims 1 to 3, wherein the manufacturing device (3) is a semiconductor manufacturing device.

5. The communication relay device (10) according to any one of claims 1 to 3, wherein the manufacturing device (3) is a flat panel display manufacturing device.

6. A communication relay method for relaying IP, by means of a communication relay device (10), packets exchanged between a manufacturing device (3) connected to an IP network (1), a manufacture monitoring/control device (2) connected to the IP network (1) to monitor and control operation of the manufacturing device (3), and an operating status monitoring device (4) for monitoring operating status of the manufacturing device (3) based on information contained in IP packets exchanged between the manufacturing device (3) and the manufacture monitoring/control device (2), the communication relay device (10) comprising a sequence counter (13) for holding a sequence number contained in each of IP packets exchanged between the manufacturing device (3), the manufacture monitoring/control device (2) and the operating status monitoring device (4) when the IP packets are relayed by the communication relay device (10), the communication relay method comprising the steps, executed by the communication relay device (10), of:
storing IP addresses and MAC addresses assigned in advance to the manufacturing device (3) and the manufacture monitoring/control device (2);
sending out ARP packets containing the IP addresses of the manufacturing device (3) and the manufacture monitoring/control device (2), respectively, and also containing the MAC address of the communication relay device (10); and
receiving an IP packet from any one of the manufacturing device (3), the manufacture monitoring/control device (2) and the operating status monitoring device (4), storing a sequence number contained in the received IP packet, replacing the sequence number of the received IP packet with the sequence number indicated by the sequence counter (13), and forwarding the IP packet to the destination.

7. The communication relay method according to claim 6, wherein the manufacturing device (3) and the manufacture monitoring/control device (2) each include an ARP cache (3a, 2a) for storing address information correlating IP and MAC addresses with each other, and
wherein the ARP packets are sent out to the IP network (1) at intervals of time shorter than a data retention time over which the respective ARP caches (3a, 2a) hold the address information.

## Patentansprüche

1. Eine Kommunikationsweiterleitungsvorrichtung (10) zur Weiterleitung von IP-Paketen, die ausgetauscht werden zwischen einer Produktionsvorrichtung (3), die mit einem IP-Netzwerk (1) verbunden ist, einer Produktionsüberwachungs-/-steuerungsvorrichtung (2), die mit dem IP-Netzwerk (1) zur Überwachung und Steuerung des Betriebs der Produktionsvorrichtung (3) verbunden ist, und einer Betriebszustands-Überwachungsvorrichtung (4) zur Überwachung des Betriebszustands der Produktionsvorrichtung (3) anhand von Informationen, die in IP-Paketen enthalten sind, welche zwischen der Produktionsvorrichtung (3) und der Produktionsüberwachungs-/-steuerungsvorrichtung (2) ausgetauscht werden, wobei die Kommunikationsweiterleitungsvorrichtung (10) Folgendes umfasst:
einen Adress-Informationsspeicher (11), der IP-Adressen und MAC-Adressen speichert, die im Voraus der Produktionsvorrichtung (3) und der Produktionsüberwachungs-/-steuerungsvorrichtung (2) zugewiesen werden,
eine ARP-Steuerung (12) zum Absenden von ARP-Paketen, welche die IP-Adressen der Produktionsvorrichtung (3) beziehungsweise der Produktionsüberwachungs-/-steuerungsvorrichtung (2) enthalten und welche auch die MAC-Adresse der Kommunikationsweiterleitungsvorrichtung (10) enthalten, wenn die Kommunikationsweiterleitungsvorrichtung (10) beginnt, IP-Pakete weiterzuleiten, die zwischen der Produktionsvorrichtung (3) und der Produktionsüberwachungs-/-steuerungsvorrichtung (2) ausgetauscht werden, und
einen Sequenz-Zähler (13) zum Halten einer Sequenz-Nummer, die in jedem der IP-Pakete enthalten ist, welche zwischen der Produktionsvorrichtung (3), der Produktionsüberwachungs-/-steuerungsvorrichtung (2) und der Betriebszustands-Überwachungsvorrichtung (4) ausgetauscht werden, wenn die IP-Pakete von der Kommunikationsweiterleitungsvorrichtung (10) weitergeleitet werden,
wobei, wenn ein IP-Paket von irgendeinem der Produktionsvorrichtung (3), der Produktionsüberwachungs-/-steuerungsvorrichtung (2) und der Betriebszustands-Überwachungsvorrichtung (4) empfangen wird, die Kommunikationsweiterleitungsvorrichtung (10) die Sequenz-Nummer des empfangenen IP-Pakets durch eine ersetzt, die vom Sequenz-Zähler (13) angezeigt wird, bevor das IP-Paket an ein Zielgerät weitergeleitet wird.

2. Die Kommunikationsweiterleitungsvorrichtung (10) gemäß Anspruch 1, wobei, wenn die Kommunikationsweiterleitungsvorrichtung (10) aufhört, IP-Pakete weiterzuleiten, die zwischen der Produktionsvorrichtung (3) und der Produktionsüberwachungs-/-steuerungsvorrichtung (2) ausgetauscht werden, die ARP-Steuerung (12) an das IP-Netzwerk (1) Informationen über die IP- und MAC-Adressen sendet, die im Voraus der Produktionsvorrichtung (3) und der Produktionsüberwachungs-/-steuerungsvorrichtung (2) zugewiesen wurden.

3. Die Kommunikationsweiterleitungsvorrichtung (10) gemäß Anspruch 1 oder 2, worin die Produktionsvorrichtung (3) und die Produktionsüberwachungs-/-steuerungsvorrichtung (2) jeweils einen ARP-Cache-Speicher (3a, 2a) zum Speichern von Adress-Informationen einschließen, die IP- und MAC-Adressen miteinander korrelieren, und wobei die ARP-Steuerung (12) die ARP-Pakete an das IP-Netzwerk (1) in Zeitintervallen sendet, die kürzer sind als eine Daten-Speicherzeit, während der die jeweiligen ARP-Cache-Speicher (3a, 2a) die Adress-Informationen halten.

4. Die Kommunikationsweiterleitungsvorrichtung (10) gemäß einem beliebigen der Ansprüche 1 bis 3, wobei die Produktionsvorrichtung (3) eine Halbleiter-Produktionsvorrichtung ist.

5. Die Kommunikationsweiterleitungsvorrichtung (10) gemäß einem beliebigen der Ansprüche 1 bis 3, wobei die Produktionsvorrichtung (3) eine Produktionsvorrichtung mit Flachbildschirm ist.

6. Ein Kommunikationsweiterleitungsverfahren zur Weiterleitung von IP-Paketen, über eine Kommunikationsweiterleitungsvorrichtung (10), die ausgetauscht werden zwischen einer Produktionsvorrichtung (3), die an ein IP-Netzwerk (1) angeschlossen ist, einer Produktionsüberwachungs-/-steuerungsvorrichtung (2), die zur Überwachung und Steuerung des Betriebs der Produktionsvorrichtung (3) an das IP-Netzwerk (1) angeschlossen ist, und einer Betriebszustands-Überwachungsvorrichtung (4) zur Überwachung des Betriebszustands der Produktionsvorrichtung (3) anhand von Informationen, die in IP-Paketen enthalten sind, welche zwischen der Produktionsvorrichtung (3) und der Produktionsüberwachungs-/-steuerungsvorrichtung (2) ausgetauscht werden, wobei die Kommunikationsweiterleitungsvorrichtung (10) einen Sequenz-Zähler (13) zum Halten einer Sequenz-Nummer umfasst, die in jedem der IP-Pakete enthalten ist, welche zwischen der Produktionsvorrichtung (3), der Produktionsüberwachungs-/-steuerungsvorrichtung (2) und der Betriebszustands-Überwachungsvorrichtung (4) ausgetauscht werden, wenn die IP-Pakete von der Kommunikationsweiterleitungsvorrichtung (10) weitergeleitet werden, wobei das Kommunikationsweiterleitungsverfahren folgende Schritte umfasst, die von der Kommunikationsweiterleitungsvorrichtung (10) ausgeführt werden:
Speichern von IP-Adressen und MAC-Adressen, die im Voraus der Produktionsvorrichtung (3) und der Produktionsüberwachungs-/-steuerungsvorrichtung (2) zugewiesen werden,
Absenden von ARP-Paketen, welche die IP-Adressen der Produktionsvorrichtung (3) beziehungsweise der Produktionsüberwachungs-/-steuerungsvorrichtung (2) enthalten und welche auch die MAC-Adresse der Kommunikationsweiterleitungsvorrichtung (10) enthalten, und
Empfangen eines IP-Pakets von irgendeinem der Produktionsvorrichtung (3), der Produktionsüberwachungs-/-steuerungsvorrichtung (2) und der Betriebszustands-Überwachungsvorrichtung (4), Speichern einer Sequenz-Nummer, die in dem empfangenen IP-Paket enthalten ist, Ersetzen der Sequenz-Nummer des empfangenen IP-Pakets durch die Sequenz-Nummer, die vom Sequenz-Zähler (13) angezeigt wird, und Weiterleiten des IP-Pakets an das Ziel.

7. Das Kommunikationsweiterleitungsverfahren gemäß Anspruch 6, wobei die Produktionsvorrichtung (3) und die Produktionsüberwachungs-/-steuerungsvorrichtung (2) jeweils einen ARP-Cache-Speicher (3a, 2a) zum Speichern von Adress-Informationen einschließen, die IP- und MAC-Adressen miteinander korrelieren, und
wobei die ARP-Pakete an das IP-Netzwerk (1) in Zeitintervallen gesendet werden, die kürzer sind als eine Daten-Speicherzeit, während der die jeweiligen ARP-Cache-Speicher (3a, 2a) die Adress-Informationen halten.

## Revendications

1. Dispositif relais de communication (10), pour relayer des paquets IP échangés entre un dispositif de fabrication (3) connecté à un réseau IP (1), un dispositif de surveillance/contrôle de fabrication (2), connecté au réseau IP (1), pour surveiller et contrôler le fonctionnement du dispositif de fabrication (3), et un dispositif de surveillance d'état de fonctionnement (4), pour surveiller l'état de fonctionnement du dispositif de fabrication (3) d'après une information contenue dans des paquets IP échangés entre le dispositif de fabrication (3) et le dispositif de surveillance/contrôle de fabrication (2), le dispositif relais de communication (10) comprenant :
un stockage d'information d'adresse (11), stockant des adresse IP et des adresses MAC assignées par avance au dispositif de fabrication (3) et au dispositif de surveillance/contrôle de fabrication (2) ;
un contrôleur ARP (12), pour envoyer des paquets ARP contenant les adresses IP du dispositif de fabrication (3) et du dispositif de surveillance/contrôle de fabrication (2), respectivement, et contenant également l'adresse MAC du dispositif relais de communication (10), lorsque le dispositif relais de communication (10) commence à relayer des paquets IP échangés entre le dispositif de fabrication (3) et le dispositif de surveillance/contrôle de fabrication (2) ; et
un compteur de séquences (13), pour contenir un numéro de séquence contenu dans chacun des paquets IP échangés entre le dispositif de fabrication (3), le dispositif de surveillance/contrôle de fabrication (2) et le dispositif de surveillance d'état de fonctionnement (4), lorsque les paquets IP sont relayés par le dispositif relais de communication (10),
dans lequel, lorsqu'un paquet IP est reçu d'un quelconque parmi le dispositif de fabrication (3), le dispositif de surveillance/contrôle de fabrication (2) et le dispositif de surveillance d'état de fonctionnement (4), le dispositif relais de communication (10) remplace le numéro de séquence du paquet IP reçu par un numéro indiqué par le compteur de séquences (13), avant de transmettre le paquet IP à un dispositif destinataire.

2. Dispositif relais de communication (10) selon la revendication 1, dans lequel, lorsque le dispositif relais de communication (10) stoppe le relayage de paquets IP échangés entre le dispositif de fabrication (3) et le dispositif de surveillance/contrôle de fabrication (2), le contrôleur ARP (12) envoie, au réseau IP (1), une information concernant les adresses IP et MAC assignées auparavant au dispositif de fabrication (3) et au dispositif de surveillance/contrôle de fabrication (2).

3. Dispositif relais de communication (10) selon la revendication 1 ou 2, dans lequel le dispositif de fabrication (3) et le dispositif de surveillance/contrôle de fabrication (2) contiennent chacun un cache ARP (3a, 2a), pour stocker une information d'adresse mettant en corrélation entre elles des adresses IP et MAC, et dans lequel le contrôleur ARP (12) envoie les paquets ARP au réseau IP (1), à des intervalles de temps plus courts qu'un temps de rétention de données pendant lequel les caches ARP (3a, 2a) respectifs conservent l'information d'adresse.

4. Dispositif relais de communication (10) selon l'une quelconque des revendications 1 à 3, dans lequel le dispositif de fabrication (3) est un dispositif de fabrication de semi-conducteur.

5. Dispositif relais de communication (10) selon l'une quelconque des revendications 1 à 3, dans lequel le dispositif de fabrication (3) est un dispositif de fabrication d'affichage à panneau plat.

6. Procédé de relais de communication, pour relayer, au moyen d'un dispositif relais de communication (10), des paquets IP échangés entre un dispositif de fabrication (3) connecté à un réseau IP (1), un dispositif de surveillance/contrôle de fabrication (2), connecté au réseau IP (1), pour surveiller et contrôler le fonctionnement du dispositif de fabrication (3), et un dispositif de surveillance d'état de fonctionnement (4), pour surveiller l'état de fonctionnement du dispositif de fabrication (3) d'après une information contenue dans des paquets IP échangés entre le dispositif de fabrication (3) et le dispositif de surveillance/contrôle de fabrication (2), le dispositif relais de communication (10) comprenant un compteur de séquences (13), pour contenir un numéro de séquence contenu dans chacun des paquets IP échangés entre le dispositif de fabrication (3), le dispositif de surveillance/contrôle de fabrication (2) et le dispositif de surveillance d'état de fonctionnement (4), lorsque les paquets IP sont relayés par le dispositif relais de communication (10), le procédé de relais de communication comprenant les étapes, exécutées par le dispositif relais de communication (10), consistant à :
stocker des adresse IP et des adresses MAC assignées par avance au dispositif de fabrication (3) et au dispositif de surveillance/contrôle de fabrication (2) ;
envoyer des paquets ARP contenant les adresses IP du dispositif de fabrication (3) et du dispositif de surveillance/contrôle de fabrication (2), respectivement, et contenant également l'adresse MAC du dispositif relais de communication (10), et
recevoir un paquet IP de la part d'un quelconque parmi le dispositif de fabrication (3), le dispositif de surveillance/contrôle de fabrication (2) et le dispositif de surveillance d'état de fonctionnement (4), stocker un numéro de séquence contenu dans le paquets IP reçu, remplacer le numéro de séquence du paquet IP reçu par le numéro de séquence indiqué par le compteur de séquences (13), et transmettre le paquet IP au destinataire.

7. Procédé de relais de communication selon la revendication 6, dans lequel le dispositif de fabrication (3) et le dispositif de surveillance/contrôle de fabrication (2) comprennent chacun un cache ARP (3a, 2a), pour stocker une information d'adresse mettant en corrélation entre elles des adresses IP et MAC, et
dans lequel les paquets ARP sont envoyés au réseau IP (1), à des intervalles de temps plus courts qu'un temps de rétention de données pendant lequel les caches ARP (3a, 2a) respectifs conservent l'information d'adresse.
